# EUROPÄISCHE PATENTANMELDUNG

(11) **EP 0 909 103 A1**
(43) Veröffentlichungstag der Anmeldung: **14.04.1999**
(21) Anmeldenummer: 97810664.9
(22) Anmeldetag: 16.09.1997
(51) Int. Cl.: H04Q 7/36, H04Q 7/32

(54) **Verfahren für den Betrieb eines Funksystems und Anordnung zur Durchführung des Verfahrens**

(71) Anmelder: ASCOM BUSINESS SYSTEMS AG, CH-4503 Solothurn (CH)
(72) Erfinder: Christoph, Günther, Dr., CH-2544 Bettlach (CH)
(74) Vertreter: Roshardt, Werner Alfred, Dipl.-Phys.

(57) **Zusammenfassung**

Bei einem Verfahren für den Betrieb eines Funksystems (28) wird eine Feststation (25) des Funksystems (28) stummgeschaltet, wenn sich kein betriebsbereites mobiles Fernmeldeendgerät (30) in ihrem Abdeckungsbereich (20) befindet. Eine Anordnung zur Durchführung des Verfahrens umfasst eine Feststation (25) für das Funksystem (28) und ein zur Kommunikation mit dem Funksystem (28) geeignetes mobiles Fernmeldeendgerät (30). Die Feststation (25) der Anordnung weist eine Schaltung zum Detektieren eines betriebsbereiten mobilen Fernmeldeendgerätes (30) in ihrem Abdeckungsbereich (20) und eine Schaltung zum Stummschalten des Senders der Feststation (25) in Abhängigkeit des Zustandes der Detektionsschaltung auf. Das mobile Fernmeldeendgerät (30) der Anordnung umfasst eine Schaltung zur Bestimmung seiner Position - vorzugsweise aufgrund von Signalen eines weiteren Funksystems (18) - und zur Überprüfung, ob sich diese im wesentlichen im Abdeckungsbereich (20) einer Feststation (25) des Funksystems (28) befindet, mit der es zur Kommunikation berechtigt ist, sowie eine Schaltung zur Durchführung eines Registrierungsvorgangs, der das Einschalten des Funksystems (28) bewirken kann.

## Beschreibung

### Technisches Gebiet

Die Erfindung betrifft ein Verfahren für den Betrieb eines Funksystems und eine Anordnung zur Durchführung des Verfahrens.

### Stand der Technik

Aufgrund ihrer unterschiedlichen Verwendung wurden ursprünglich für Mobilfunksysteme einerseits und für Funksysteme zum Zwecke der schnurlosen Telefonie andrerseits unterschiedliche technische Standards betreffend Sendefrequenzen, Übertragungsprotokoll, Reichweite usw. entwickelt. Dies führte dazu, dass in den meisten Fällen keine Kompatibilität besteht zwischen Mobilfunksystemen, wie sie zum Beispiel für die Automobil-Telefonie verwendet werden, und sogenannten CT-Systemen (CT = Cordless Telephone), d.h. kleinräumigen Funksystemen für die schnurlose Telefonie.

Mobilfunksysteme sind nicht immer, aber häufig (z.B. GSM-Systeme) zellulare Systeme mit einem zellenartig strukturierten Abdeckungsgebiet. In jeder Zelle kommunizieren die mobilen Stationen (Mobile Station) über eine Funk-Schnittstelle (air interface) mit einer ortsfesten Basisstation (Base Station). Die Basisstation kann über geeignete Kommunikationsverbindungen (z.B. drahtgebundene Fernmeldeverbindungen, Richtstrahlverbindungen, Funkverbindungen usw.) mit weiteren Zellen des gleichen Mobilfunksystems und/oder anderen Fernmeldesystemen verbunden sein. Typische Reichweiten bei Mobilfunksystemen (d.h. Zellenradien bei zellularen Systemen) liegen im Bereich von wenigen km bis ca. 60 km. Die Frequenzzuteilung erfolgt bei zellularen Mobilfunksystemen üblicherweise aufgrund einer aktiven Zellenplanung.

Demgegenüber umfassen CT-Systeme üblicherweise eine oder mehrere ortsfeste Feststationen (Fixed Part), die an einen Anschluss eines drahtgebundenen Festnetzes angeschlossen sind, und ein oder mehrere tragbare, schnurlose Handapparate oder Schnurlostelefone (Portable Part), die über eine Funkschnittstelle mit der Feststation kommunizieren können. Typische Reichweiten liegen im Bereich von 50 m bis zu einigen 100 m. Die Frequenzzuteilung erfolgt üblicherweise durch ein dynamisches, automatisches Verfahren auf Frequenzen, die momentan gerade frei sind.

Benutzerseitig besteht ein grosses Bedürfnis nach einem mobilen Fernmeldeendgerät z.B. in Form eines Handfunktelefons, das sowohl als Schnurlostelefon in einem oder mehreren (kleinräumigen) CT-Systemen als auch als mobile Station für ein oder mehrere (grossräumige) Mobilfunksysteme verwendbar ist. Ein solches Fernmeldeendgerät, das in mindestens zwei verschiedenen Funksystemen verwendbar ist, wird als DMT (Dual Mode Terminal) bezeichnet. Idealerweise ist der Benutzer eines DMTs stets unter der gleichen Telefonnummer erreichbar, unabhängig davon, über welches der verschiedenen Funksysteme die Kommunikation stattfindet. Dies ist jedoch stark von der Netzwerkunterstützung für einen solchen Dienst abhängig.

Es sind mehrere Vorschläge für den kombinierten Betrieb von grossräumigen Mobilfunksystemen und kleinräumigen Funksystemen gemacht worden. So gibt es Vorschläge zur Kombination eines Mobilfunksystems nach dem GSM-Standard mit einem Funksystem, das nach einem der für CT-Systeme entwickelten Standard, insbesondere DECT, betrieben wird.

Zur Herstellung von möglichst einfachen und kostengünstigen DMTs für den kombinierten Betrieb in einem Mobilfunksystem und einem CT-System ist es wünschenswert, dass möglichst viele Gerätekomponenten wie Antenne, Empfänger, Sender usw. sowohl für das Mobilfunksystem als auch für das CT-System verwendbar sind. Aus diesem Grund sieht ein neuerer Vorschlag vor, ein GSM-Mobilfunksystem mit einem CT-System zu kombinieren, das nach einem zum Zwecke der schnurlosen Telefonie modifizierten GSM-Standard betrieben wird. Ein Teil der Modifikation für dieses sogenannte GSM-CTS (CTS steht für "Cordless Telecommunication System") betrifft die GSM-Systemsteuerungskanäle. Die Basisstation eines ''normalen'' GSM-Mobilfunksystems überträgt über spezielle Systemsteuerungskanäle laufend systemrelevante Daten wie eine Identifikation der Basisstation, die von ihr und eventuell von den Basisstationen benachbarter Zellen benutzten Frequenzen und Kanäle usw. Viele dieser Daten werden nur für den Betrieb eines Mobilfunksystems, nicht aber für den Betrieb eines CT-Systems benötigt. Zur Verringerung der Kanalbelastung sendet deshalb die sogenannte HBS (Home Base Station = Fixed Part oder Feststation eines CT-Systems, das nach GSM-CTS betrieben wird) anstelle sämtlicher GSM-Systemsteuerungskanäle nur die für den CT-Betrieb benötigten systemrelevanten Daten auf einem sogenannten Beacon-Kanal aus. Unter anderem wird auf dem Beacon-Kanal laufend ein Kennsignal ausgesendet, aufgrund dessen die DMTs bestimmen können, ob sie sich noch im Abdeckungsbereich der HBS befinden.

Mobilfunksysteme und schnurlose Telefone haben in den vergangenen Jahren stark an Verbreitung gewonnen. Neben der Sprachübertragung bieten neuere Systeme auch Telefax- und/oder Datenübertragung (z.B. Domputer-Kommunikation) an. Obwohl der für Mobilfunksysteme und/oder CT-Systeme bereitgestellte Frequenzbereich nach den bisherigen Standards recht gross ist, stösst man aufgrund der grossen Verbreitung dieser Systeme bereits an Kapazitätsgrenzen. Es ist deshalb erstrebenswert, mit den begrenzten Ressourcen an verfügbaren Frequenzbändern sparsam umzugehen und diese effizient zu nutzen.

Der Einfachheit halber werden im folgenden die Ausdrücke "Frequenz" bzw. "Trägerfrequenz" auch dann verwendet, wenn nicht nur eine, sondern tatsächlich ein Paar von sogenannten Duplex-Frequenzen bzw. Duplex-Trägerfrequenzen verwendet wird, z.B. zum Senden von einer Basisstation zu einer mobilen Station (down-link) und umgekehrt (up-link). Unter "Kanal" ist nachfolgend die Ressource zu verstehen, die notwendig ist, um Signalisierungs- oder Benutzerdaten über die Luft-Schnittstelle zu übertragen. Im GSM besteht ein Kanal zum Beispiel aus einer Kombination aus einer bestimmten Trägerfrequenz und einem bestimmten Zeitfenster (time slot). Als mobiles Fernmeldeendgerät wird ein Fernmeldeendgerät (Telefonapparat, Telefaxgerät, Datenübertragungsmodem o.ä) bezeichnet, das zur Kommunikation elektromagnetische Wellen über eine Funk-Schnittstelle (air interface) sendet und/oder empfängt. Ein für mindestens zwei verschiedene Funksysteme verwendbares mobiles Fernmeldeendgerät wird als DMT (Dual Mode Terminal) bezeichnet. Unter einer Feststation wird allgemein eine typischerweise ortsfeste Funkstation verstanden, im besonderen Falle eines CT-Systems deren Fixed Part. Beim Beispiel eines für den Tandem-Betrieb ausgerüsteten Automobiltelefons ist die Feststation allerdings nicht eigentlich ortsfest, da die Feststation in diesem Fall aus dem fest im Automobil angebrachten Teil der Anlage besteht. Der Abdeckungsbereich einer Funkstation ist der Bereich, in welchem ein mobiles Fernmeldeendgerät über die Funkschnittstelle mit der Funkstation kommunizieren kann.

### Darstellung der Erfindung

Der Erfindung liegt die Aufgabe zugrunde, ein Verfahren für den Betrieb eines Funksystems bereitzustellen, das eine effiziente Nutzung der begrenzten Ressourcen an verfügbaren Kanälen in einem begrenzten Frequenzbereich gewährleistet.

Die Lösung der Aufgabe ist Gegenstand der unabhängigen Patentansprüche 1, 11, 12 und 13.

Gemäss der Erfindung wird bei einem Verfahren für den Betrieb eines Funksystems eine Feststation des Funksystems stummgeschaltet, wenn sich kein betriebsbereites mobiles Fernmeldeendgerät in ihrem Abdeckungsbereich befindet. Stummschalten bedeutet, dass keine elektromagnetischen Signale über den Sender gesendet werden, insbesondere weder systemrelevante Daten über einen Beacon-Kanal oder einen Systemsteuerungskanal noch Signale für eine Daten- oder Gesprächsübertragung. Vorzugsweise überwacht ein zur Kommunikation mit einem oder mehreren anderen Funksystemen fähiges mobiles Fernmeldeendgerät die Belegung der Kanäle durch andere Funksysteme immer wieder. Wenn dieses Fernmeldeendgerät erstens selbst nur auf freien Kanälen sendet sowie zweitens der Feststation immer wieder die verfügbaren freien Kanäle mitteilt, auf der diese senden kann, wird weitgehend verhindert, dass andere Funksysteme mit Zugriff auf die gleichen Frequenzen durch das mittels dem erfindungsgemässen Verfahren betriebene Funksystem gestört werden. Ausserdem werden auch andere unabhängige Systeme desselben Typs nicht oder nur minimal gestört. Wenn sich kein betriebsbereites mobiles Fernmeldeendgerät mehr im Abdeckungsbereich einer Feststation des Funksystems befindet, werden durch das Funksystem keine Frequenzen oder Kanäle mehr belegt, da die Feststation stummgeschaltet wird; die begrenzten Frequenzbänder werden für eine effiziente, störungsfreie Nutzung freigehalten.

Im Gegensatz zur Erfindung ist es bei den bisher verwendeten Verfahren für den Betrieb von Funksystemen nicht vorgesehen, den Sender einer Feststationen stummzuschalten, sobald sich kein betriebsbereites mobiles Fernmeldeendgerät in ihrem Abdeckungsbereich befindet. Vielmehr sehen die bei CT-Systemen wie DEDT und GSM-CTS verwendeten Verfahren vor, dass die Feststation z.B. über einen Systemsteuerungs-Kanal oder einen Beacon-Kanal laufend Signale aussendet, um mobilen Fernmeldeendgeräten die Verfügbarkeit der Feststation zu signalisieren. Falls sich kein betriebsbereites mobiles Fernmeldeendgerät in der Nähe der Feststation befindet, wird dadurch unnötigerweise laufend ein Teil der verfügbaren Kanäle durch den Systemsteuerungs- oder den Beacon-Kanal belegt.

Bei längerer Abwesenheit des mobilen Fernmeldeendgerätes kann sich ausserdem die Nutzung der Kanäle durch andere Funksysteme ändern. Ein Kanal, der mit Hilfe des mobilen Fernmeldeendgerätes zu einem früheren Zeitpunkt als unbelegt beurteilt wurde, ist es inzwischen möglicherweise nicht mehr. Wenn ein solcher Kanal als Beacon-Kanal verwendet wird, verursacht er unter Umständen erhebliche Störungen. Die Feststation des Funksystems ist nur bedingt in der Lage, dies festzustellen, da das Signal der Basisstation des anderen Systems die zuverlässigste Beurteilung erlaubt und da die Feststation aus Komplexitäts- und Kostengründen keinen Empfänger für dieses Signal besitzt.

Eine Anordnung zur Durchführung des erfindungsgemässen Verfahrens umfasst eine Feststation für das Funksystem und ein zur Kommunikation mit dem Funksystem geeignetes mobiles Fernmeldeendgerät.

Eine erfindungsgemässe Feststation weist eine Schaltung zum Detektieren eines betriebsbereiten mobilen Fernmeldeendgerätes in ihrem Abdeckungsbereich und eine Schaltung zum Stummschalten des Senders der Feststation in Abhängigkeit des Zustandes der Detektionsschaltung auf.

Ein mobiles Fernmeldeendgerät gemäss der Erfindung hat eine Schaltung zur Bestimmung seiner Position und zur Überprüfung, ob sich diese im wesentlichen im Abdeckungsbereich einer Feststation des Funksystems befindet, mit der es zur Kommunikation berechtigt ist, sowie eine Schaltung zur Registrierung des Fernmeldeendgerätes, wenn letzterer Zustand eingetreten ist.

Vorzugsweise sendet beim erfindungsgemässen Verfahren die Feststation ein Kennsignal über einen vorbestimmten Kanal aus, wenn sich mindestens ein betriebsbereites mobiles Fernmeldeendgerät in ihrem Abdeckungsbereich befindet, um dem mobilen Fernmeldeendgerät die Verfügbarkeit der Feststation zu signalisieren.

Bei einer bevorzugten Ausführungsart des erfindungsgemässen Verfahrens bestimmt ein zur Kommunikation (über eine Funk-Schnittstelle) mit dem Funksystem geeignetes mobiles Fernmeldeendgerät seine Position von Zeit zu Zeit und überprüft, ob sich diese im wesentlichen im Abdeckungsbereich einer Feststation des Funksystems befindet, zu der es zur Kommunikation berechtigt ist. Wenn dies zutrifft, überprüft das mobile Fernmeldeendgerät, ob es zur Kommunikation mit der Feststation geeignete freie Kanäle gibt. Wenn auch dies zutrifft, beginnt das mobile Fernmeldeendgerät die Kommunikation mit der Feststation, indem es auf vorbestimmten Kanälen, welche die Feststation dauernd überwacht, Signale aussendet, und es versucht sich bei der Feststation zu registrieren. Eine erfolgreiche Registrierung gelingt nur dann, wenn sich u.a. das mobile Fernmeldeendgerät tatsächlich im Abdeckungsbereich des Feststation befindet und das im Registrierungsprozess integrierte Identifikations- und Authentifikationsverfahren erfolgreich abläuft, d.h. auch tatsächlich eine Berechtigung zur Nutzung der Feststation oder des Feststationennetzes vorliegt. Erst wenn sich mindestens ein mobiles Fernmeldeendgerät registriert hat, beginnt die Feststation mit dem Senden eines Kennsignals. Aufgrund des Kennsignals wird die Feststation für das mobile Fernmeldeendgerät quasi sichtbar. Auch nach seiner Registrierung bei der Feststation überwacht das mobile Fernmeldegerät die Belegung der Kanäle durch andere Funksysteme, um nötigenfalls eine Verlegung des Kennsignals in einen anderen Kanal oder die Verlegung von Datenkanälen zu ermöglichen.

Zur Positionsbestimmung kann das mobile Fernmeldeendgerät Daten von einem zellularen Funksystem, von einem Ortungssystem wie zum Beispiel GPS, Loran-C, Omega oder von irgend einem anderen System zur Bestimmung seiner ungefähren Position verwenden. Eine allzu exakte Positionsbestimmung ist nicht nötig, da sich im Verlaufe eines allfälligen Registrierungsvorgangs herausstellt, ob sich das mobile Fernmeldeendgerät im Abdeckungsbereich der Feststation befindet oder nicht.

Das Funksystem besteht bei einer Ausführungsart der Erfindung aus einem CT-System. Das CT-System kann nach einem der Standards GSM-CTS, CT1, DECT, oder irgend einem anderen der für CT-Systeme geeigneten Standard betrieben werden.

Bei einer bevorzugten Ausführungsart der Erfindung ist das mobile Fernmeldeendgerät zur Kommunikation mit einem weiteren Funksystem geeignet (beim Fernmeldeendgerät handelt es sich somit um ein DMT) und bestimmt seine Position aufgrund von Signalen, die es vom weiteren Funksystem empfängt. Das weitere Funksystem kann zum Beispiel aus einem Mobilfunksystem, insbesondere aus einem GSM-Mobilfunksystem, bestehen. Zur Positionsbestimmung mit Hilfe eines GSM-Systems können die für das mobile Fernmeldeendgerät sichtbaren Basisstationen, die relativen Verzögerungen ihrer Signale, die Feldstärken der Signale und/oder weitere Daten herangezogen werden. Die beiden Funksysteme werden vorzugsweise mindestens teilweise überlappend betrieben. Falls die beiden Systeme z.B. aus einem CT-System und einem GSM System bestehen und das DMT seine Positionsbestimmung aufgrund der GSM-Daten vornimmt, muss der Abdeckungsbereich jeder CT-Feststation mindestens teilweise mit einer GSM-Zelle überlappen, da sonst nach einem allfälligen Stummschalten der CT-Feststation diese nicht mehr aufgeweckt werden könnte. Zellen, die völlig ausserhalb des weiteren Funksystems liegen, können ihren Beacon- oder Broadcast-Kanal permanent eingeschaltet lassen, da sich dies in diesem besonderen Fall nicht störend auswirkt.

Vorzugsweise überwacht das mobile Fernmeldeendgerät nach seiner Registrierung bei der Feststation das Kennsignal der Feststation dauernd, um ein bevorstehendes Verlassen des Abdeckungsbereichs der Feststation aufgrund einer Abschwächung des Kennsignals vorzeitig erkennen zu können. Sobald ein bevorstehendes Verlassen aufgrund einer Abschwächung des Kennsignals erkannt wird, kann das mobile Fernmeldeendgerät seine Registrierung bei der Feststation löschen. Wenn es sich beim mobilen Fernmeldeendgerät um ein DMT handelt, löscht das DMT seine Registrierung vorzugsweise nur dann, wenn es sich gleichzeitig beim anderen Funksystem registrieren kann. Dadurch wird z.B. bei einem DMT für ein CT-System und ein GSM-System verhindert, dass das DMT seine Registrierung bei des Feststation des CT-Systems löscht, wenn es kurzfristig z.B. in einen Kellerraum bewegt wird, wo es weder im Abdeckungsbereich des CT-Systems noch im Abdeckungsbereich des GMS-Systems ist.

Nach einer erfolgreichen Registrierung bei einer Feststation überwacht das mobile Fernmeldeendgerät vorzugsweise das Kennsignal dieser Feststation und erneuert seine Registrierung von Zeit zu Zeit, solange es aufgrund des Kennsignals erkennt, dass es sich noch im Abdeckungsbereich der Feststation befindet. Die Registrierung des mobilen Fernmeldeendgerätes bei der Feststation wird vorzugsweise gelöscht, wenn sie nicht innerhalb einer vorgegebenen Zeitspanne seit der letzten Registrierung erneuert wird. Damit wird verhindert, dass mobile Fernmeldeendgeräte bei der Feststation registriert bleiben, wenn sie sich z.B. aufgrund eines plötzlichen Ereignisses nicht korrekt bei ihr abmelden.

Durch die Erfindung wird somit ein Verfahren für den Betrieb eines Funksystems und eine Anordnung zur Durchführung des Verfahrens bereit gestellt, das eine effiziente Nutzung der Kanäle in einem begrenzten Frequenzbereich gewährleistet. Das erfindungsgemässe Verfahren ermöglicht insbesondere den kombinierten Betrieb eines GSM-Mobilfunksystem mit einem CT-System, das nach einem zum Zwecke der schnurlosen Telefonie modifizierten GSM-Standard betrieben wird, wobei die beiden Systeme den gleichen begrenzten, für GSM reservierten Frequenzbereich benutzen.

Die nachfolgende detaillierte Beschreibung der vorliegenden Erfindung dient in Verbindung mit der beiliegenden Zeichnung nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit der beiliegenden Zeichnung und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnung

Die Zeichnung stellt eine bevorzugte Ausführungsart der vorliegenden Erfindung dar. Es zeigt:

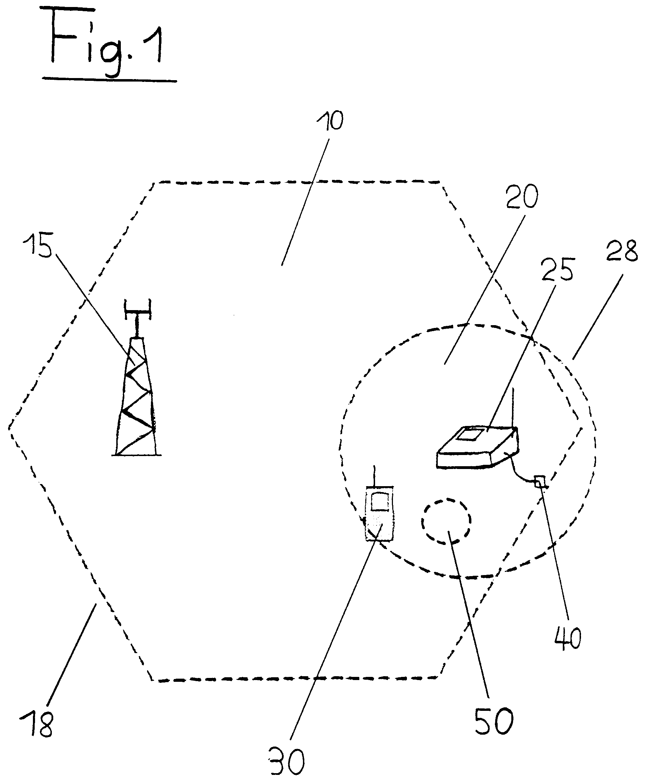

- Fig. 1: eine vereinfachte schematische Darstellung von zwei verschiedenen, überlappenden Funksystemen, von denen eines nach dem Verfahren gemäss der Erfindung betrieben wird.

### Wege zur Ausführung der Erfindung

Figur 1 stellt in vereinfachter Form ein Funksystem in Form eines CT-System 28 dar, das gemäss dem Verfahren der Erfindung betrieben wird, sowie ein mit diesem überlappend betriebenes GSM-Mobilfunksystem 18. Eine Feststation 25 (Fixed Part) des Funksystem 28 hat einen Abdeckungsbereich 20. Die Feststation 25 ist über einen Anschluss 40 an ein ortsfestes, drahtgebundenes Fernmeldenetz angeschlossen. Zur Feststation 25 des Funksystems 28 gibt es ein schnurloses Telefon 30 (Portable Part). Eine Basisstation 15 des Mobilfunksystems 18 definiert eine (hexagonal dargestellte) Zelle 10, wobei das Mobilfunksystem 18 weitere Zellen und Basisstationen (nicht dargestellt) umfasst. Die Zelle 10 und der Abdeckungsbereich 20 sind geographisch mindestens teilweise überlappend angeordnet. Die beiden Funksysteme 18, 28 werden auch frequenzmässig überlappend betrieben, wobei das Funksystem 28 nach dem GSM-CTS Standard und das Mobilfunksystem 18 nach dem GSM-Standard betrieben werden.

Das schnurlose Telefon 30 ist auch als GSM-Handfunktelefon 30 (Mobile Station) für den Betrieb im makrozellularen GSM-System ausgerüstet: Es kann über eine Funkschnittstelle sowohl mit der Feststation 25 des GSM-CTS-Systems als auch mit der Basisstation 15 des GSM-Systems kommunizieren und ist somit ein DMT (Dual Mode Terminal). Beim GSM-CTS Betrieb wird ein Gespräch vom DMT 30 über eine Funk-Schnittstelle zur Feststation 25 und von dieser über den Netzanschluss 40 und ein drahtgebundenes Festnetz an irgend einen anderen Anschluss am Festnetz oder an einem mit dem Festnetz verbundenen weiteren Fernmeldenetz übertragen. Beim GSM-Betrieb kommuniziert das DMT 30 über Funk mit der Basisstation 15 des GSM-Systems 18 und funktioniert als übliches GSM-Handy. Ein Gespräch wird dann über das zellulare GSM-Mobilfunksystem 18 und gegebenenfalls weitere mit diesem GSM-System verbundene Fernmeldenetze übermittelt.

Aus Kosten- und Komplexitätsgründen ist die GSM-CTS-Feststation 25 (Fixed Part des CT-Systems 28) nicht mit einem Empfänger im Sendeband ausgerüstet und kann deshalb keine Signale, insbesondere auch keine Broadcast-Signale, des GSM-Systems 18 empfangen.

Wenn sich kein betriebsbereites DMT 30 im Abdeckungsbereich 20 der GSM-CTS-Feststation 25 befindet, ist der Sender der GSM-CTS-Feststation 25 stummgeschaltet und sendet keine Signale aus. In diesem Zustand überwacht die GSM-CTS-Basisstation 25 dauernd einen Satz von zuvor vereinbarten Kanälen des GSM-CTS-Systems.

Das DMT 30 bestimmt anhand von GSM-Signalen des GSM-Systems 18, z.B. den sichtbaren Basisstationen, den relativen Verzögerungen ihrer Signale, den Feldstärken der Signale usw., von Zeit zu Zeit seine Position und überprüft, ob sich diese im Abdeckungsbereich einer Feststation des CT-Systems 28 befindet, mit der es zur Kommunikation berechtigt ist. Nachdem das in Figur 1 dargestellte DMT 30 festgestellt hat, dass es sich im Abdeckungsbereich 20 des Feststation 25 befinden kann, mit der es zur Kommunikation berechtigt ist, überprüft das DMT 30, ob es zur Kommunikation mit der Feststation 25 geeignete freie Kanäle gibt. Wenn auch dies zutrifft, beginnt das DMT 30 die Kommunikation mit der Feststation 25, indem es auf vorbestimmten Kanälen, welche von der Feststation 25 dauernd überwacht werden, Signale aussendet. Das DMT 30 versucht sich mittels eines Registrierungsverfahrens, bei dem zwischen dem DMT 30 und der Feststation 25 Registrierungssignale übermittelt werden, bei der Feststation 25 zu registrieren. Eine erfolgreiche Registrierung gelingt nur dann, wenn sich u.a. das DMT 30 tatsächlich im Abdeckungsbereich der Feststation 25 befindet, und das im Registrierungsprozess integrierte Identifikations- und Authentifikationsverfahren erfolgreich abläuft, d.h. auch tatsächlich eine Berechtigung zur Nutzung der Feststation 25 oder des Feststationennetzes vorliegt. Erst wenn sich mindestens ein DMT 30 registriert hat, beginnt die Feststation 25 mit dem Senden eines Kennsignals auf dem sogenannten Beacon-Kanal der GSM-CTS Feststation 25. Aufgrund dieses Kennsignals wird die Feststation 25 für das DMT 30 nun quasi sichtbar. Freie Kanäle werden vom DMT 30 gesucht und, falls gefunden, an die Feststation 25 übermittelt, da das DMT 30 - im Gegensatz zur Feststation 25 - zum Empfangen der Signale von GSM-Basisstationen des GSM-Systems 18 ausgerüstet ist.

Auch nach seiner Registrierung bei der Feststation 25 überwacht das DMT 30 in gewissen Zeitabständen die Belegung der Kanäle durch das GSM-Mobilfunksystem 18, um nötigenfalls eine Verlegung des Beacon-Kanals in einen anderen Kanal oder Änderungen bei den für Kommunikationszwecke vorgesehenen freien Kanälen zu ermöglichen, damit bei einem Verbindungsaufbau z.B. infolge eines Anrufs an das DMT 30 nicht auf Kanäle zugegriffen wird, die durch das GSM-System 18 belegt sind.

Falls die Registrierung misslungen ist und kein anderes DMT bei der Feststation 25 registriert ist, bleibt die Feststation stummgeschaltet. Wenn das DMT 30 feststellt, dass sich ein neuer Versuch zur Registrierung lohnt, wird es diesen unternehmen. Als Indikationen hierführ können z.B. verwendet werden: die Änderung der Position innerhalb des als Abdeckungsbereich betrachteten Gebiets, das Ablaufen einer gewissen Zeit und weitere.

Weil das DMT 30 erstens selbst nur auf freien Kanälen sendet, zweitens der Feststation 25 immer wieder die verfügbaren freien Kanäle mitteilt, auf der diese senden kann, wird weitgehend verhindert, dass das Mobilfunksystem 18, das Zugriff auf die gleichen Frequenzen hat wie das Funksystem 28, das Funksystem 28 stört oder durch dieses gestört wird.

Das DMT 30 überwacht nach seiner Registrierung bei der GSM-CTS-Feststation 25 das Kennsignal der Feststation 25 in gewissen Zeitabständen, um ein bevorstehendes Verlassen des Abdeckungsbereichs 20 der Feststation 25 aufgrund einer Abschwächung des Kennsignals vorzeitig erkennen zu können. Sobald das DMT 30 ein bevorstehendes Verlassen aufgrund einer Abschwächung des Kennsignals erkennt, überprüft das DMT 30, ob es sich noch im Abdeckungsbereich 10 des GSM-Systems 18 befindet. Wenn dies der Fall ist, kann das DMT 30 seine Registrierung bei der Feststation 25 löschen und sich beim Mobilfunksystem 18 anmelden, falls es dort nicht angemeldet geblieben ist. Falls die Registrierung bei der Feststation 25 nur gelöscht wird, wenn das DMT 30 zum anderen Funksystem 18 wechselt, kann verhindert werden, dass das DMT 30 seine Registrierung bei der Feststation 25 des CT-Systems löscht, wenn es kurzfristig z.B. in einen Kellerraum 50 bewegt wird, wo es weder im Abdeckungsbereich des CT-Systems 28 noch im Abdeckungsbereich des GSM-Systems 18 liegt.

Solange das DMT 30 bei der Basisstation 25 registriert ist, überwacht es das Kennsignal der Feststation 25 und erneuert seine Registrierung von Zeit zu Zeit, wenn es aufgrund des Kennsignals erkennt, dass es sich noch im Abdeckungsbereich 20 der Feststation 25 befindet. Die Registrierung des DMTs 30 bei der Feststation 25 wird gelöscht, wenn sie nicht innerhalb einer vorgegebenen Zeitspanne seit der letzten Registrierung erneuert wird. Damit wird verhindert, dass das DMT 30 bei der Feststation 25 registriert bleibt (und die Feststation 25 mit dem Aussenden des Kennsignals fortfährt), wenn sich das DMT 30 nicht korrekt bei der Feststation 25 abmeldet und seine Registrierung löscht. Ein solcher vorzeitiger Verbindungsabbruch kann zum Beispiel eintreten, wenn ein Benutzer die Batterie eines DMTs entfernt oder das DMT in einen Metallschrank legt.

Bei CT-Systemen mit mehreren schnurlosen Telefonen wird eine Feststation stummgeschaltet, nachdem die letzte aus einer Vielzahl von Registrierungen bei der Feststation gelöscht ist und sich somit kein betriebsbereites schnurloses Telefon mehr im Abdeckungsbereich der Basisstation befindet.

Zusammenfassend ist festzustellen, dass durch die Erfindung ein Verfahren für den Betrieb eines Funksystems und eine Anordnung zur Durchführung des Verfahrens bereit gestellt wird, das eine effiziente Nutzung der verfügbaren Kanäle in einem begrenzten Frequenzbereich gewährleistet. Das erfindungsgemässe Verfahren ermöglicht insbesondere den kombinierten Betrieb eines GSM-Mobilfunksystem mit einem CT-System, das nach einem zum Zwecke der schnurlosen Telefonie modifizierten GSM-Standard betrieben wird, wobei die beiden Systeme den gleichen begrenzten, für GSM reservierten Frequenzbereich benutzen.

## Patentansprüche

1. Verfahren für den Betrieb eines Funksystems (28), dadurch gekennzeichnet, dass eine Feststation (25) des Funksystems (28) stummgeschaltet wird, wenn sich kein betriebsbereites mobiles Fernmeldeendgerät (30) in ihrem Abdeckungsbereich (20) befindet.

2. Verfahren nach Anspruch 1, dadurch gekennzeichnet, dass die Feststation (25) ein Kennsignal über einen vorbestimmten Kanal aussendet, wenn sich mindestens ein betriebsbereites mobiles Fernmeldeendgerät (30) in ihrem Abdeckungsbereich (20) befindet.

3. Verfahren nach Anspruch 1 oder 2, dadurch gekennzeichnet, dass ein zur Kommunikation mit dem Funksystem (28) geeignetes mobiles Fernmeldeendgerät (30) seine Position von Zeit zu Zeit bestimmt und überprüft, ob sich diese im wesentlichen im Abdeckungsbereich (20) einer Feststation (25) des Funksystems (28) befindet, mit der es zur Kommunikation berechtigt ist, wobei zutreffendenfalls das mobile Fernmeldeendgerät (30) mittels eines Registrierungssignals sich bei der Feststation (25) als betriebsbereites mobiles Fernmeldeendgerät (30) zu registrieren versucht.

4. Verfahren nach Anspruch 3, dadurch gekennzeichnet, dass das mobile Fernmeldeendgerät (30) das Registrierungssignal über einen Kanal aus einem Satz von zuvor vereinbarten Kanälen mitteilt, die von der Feststation (25) dauernd überwacht werden.

5. Verfahren nach einem der Ansprüche 1 bis 4, dadurch gekennzeichnet, dass das Funksystem (28) nach dem GSM-CTS Standard betrieben wird.

6. Verfahren nach einem der Ansprüche 3 bis 5, dadurch gekennzeichnet, dass das mobile Fernmeldeendgerät (30) zusätzlich zur Kommunikation mit einem weiteren Funksystem (18) geeignet ist und seine Positionsbestimmung aufgrund von Signalen durchführt, die es vom weiteren Funksystem (18) empfängt.

7. Verfahren nach Anspruch 6, dadurch gekennzeichnet dass die beiden Funksysteme (18, 28) sowohl geographisch als auch frequenzmässig überlappend betrieben werden.

8. Verfahren nach einem der Ansprüche 6 oder 7, dadurch gekennzeichnet, dass das weitere Funksystem (18) als Mobilfunksystem nach dem GSM-Standard betrieben wird.

9. Verfahren nach Anspruch 2 und einem der Ansprüche 3 bis 8, dadurch gekennzeichnet, dass das mobile Fernmeldeendgerät (30) nach seiner Registrierung bei der Feststation (25) das Kennsignal der Feststation (25) dauernd überwacht und seine Registrierung bei der Feststation (25) löschen kann, sobald es aufgrund einer Abschwächung des Kennsignals ein bevorstehendes Verlassen des Abdeckungsbereichs (20) der Feststation (25) erkennt.

10. Verfahren nach einem der Ansprüche 3 bis 9, dadurch gekennzeichnet, dass die Registrierung des mobilen Fernmeldeendgerätes (30) bei der Feststation (25) gelöscht wird, wenn sie nicht innerhalb einer vorgegebenen Zeitspanne seit der letzten Registrierung erneuert wird.

11. Anordnung zur Durchführung des Verfahrens nach einem der Ansprüche 1 bis 10, gekennzeichnet durch eine Feststation (25) für das Funksystem (28) und ein zur Kommunikation mit dem Funksystem (28) geeignetes mobiles Fernmeldeendgerät (30).

12. Feststation (25) für die Anordnung nach Anspruch 11, gekennzeichnet durch eine Schaltung zum Detektieren eines betriebsbereiten mobilen Fernmeldeendgerätes (30) in ihrem Abdeckungsbereich (20) und eine Schaltung zum Stummschalten des Senders der Feststation (25) in Abhängigkeit des Zustandes der Detektionsschaltung.

13. Mobiles Fernmeldeendgerät (30) für die Anordnung nach Anspruch 11, gekennzeichnet durch eine Schaltung zur Bestimmung seiner Position - vorzugsweise aufgrund von Signalen eines weiteren Funksystems (18) - und zur Überprüfung, ob sich diese im wesentlichen im Abdeckungsbereich (20) einer Feststation (25) des Funksystems (28) befindet, mit der es zur Kommunikation berechtigt ist, sowie eine Schaltung zur Durchführung eines Registrierungsvorgangs.
